Europäisches Patentamt

European Patent Office

Office européen des brevets

(11) Publication number: **0 412 776 A2**

# EUROPEAN PATENT APPLICATION

(21) Application number: 90308677.5

(51) Int. Cl.⁵: **B60C 9/22**, B60C 1/00

(22) Date of filing: 07.08.90

(30) Priority: 09.08.89 JP 207416/89

(43) Date of publication of application:
13.02.91 Bulletin 91/07

(84) Designated Contracting States:
DE FR GB IT

(71) Applicant: SUMITOMO RUBBER INDUSTRIES
LIMITED
1-1 Tsutsuicho 1-chome Chuo-ku
Kobe-shi Hyogo-ken(JP)

(72) Inventor: Iuchi, Munenori
3-1-46-1205 Minatojima-Nakamachi, Chuo-ku
Kobe-shi, Hyogo-ken(JP)
Inventor: Nakano, Kunihiko
56-59 Akibadai 1-chome, Nishi-ku
Kobe-shi, Hyogo-ken(JP)

(74) Representative: Stewart, Charles Geoffrey
SP TYRES UK LIMITED Tyre Technical
Division
Fort Dunlop Erdington Birmingham B24
9QT(GB)

(54) **Pneumatic radial tyre.**

(57) A pneumatic radial tyre comprising a radial carcass (6), a rubber tread (15) disposed radially outside the carcass (6) to define a slick tread surface, a breaker (7) disposed radially outside the carcass (6), and a band (8) composed of one of more cords spirally and continuously wound around the radially outside of the breaker. Preferably the tread rubber has the following elastic property: the ratio (tan $\delta$/E$'$) of the loss tangent (tan $\delta$) to the elastic modulus (E$'$ kgf/cm$^2$) is not less than $1.0 \times 10^{-2}$, and also the JIS(A) hardness may be not more than 45 at 100 degrees C, and further the acetone extract from the tread rubber may be not less than 30%, and the sulfur content of the tread rubber may be not more than 1.8 parts by weight per 100 parts of polymer.

FIG.1

## PNEUMATIC RADIAL TYRE

The present invention relates to a pneumatic radial ply tyre improved in road grip performance and high speed durability and more particularly to a slick tyre for racing use.

In general, in order to prevent the breaker layer from being lifted by centrifugal force during high speed running, a band made of rubberised fabric in which organic fibre cords are laid at small angles to the tyre equator is disposed radially outside the breaker.

Conventionally, such a band is formed by wrapping a strip of rubberised fabric around the breaker, and accordingly the band has at least one joint where the cut ends of the rubberised fabric are overlapped one upon the other.

Since the band cords are not continuous in such an overlap joint part, there is a resultant weak point when the tyre is run at extremely high speed, and furthermore this type of joint causes a thickness variation. If the tread has transverse grooves, the bad effect of this thickness variation on tyre performance can be reduced by particularly arranging the position of the tread grooves.

In a slick tyre such as is used for racing, however, this method is not possible and RRO (Radial Run-Out) and RFV (Radial Force Variation) are increased so that tyre uniformity, road grip performance and running performance are all made worse by the joint.

Further, under such an extremely high speed condition, a great amount of heat is generated by the repeated deformation of the tyre and due to friction between the tread and the road, which fatigues the tread rubber, that is, the rubber is softened and some ingredients thereof are gasified. As a result, the tyre is blown outwards at the weak joint part.

It is therefore an object of the present invention to provide a pneumatic radial tyre, in which durability, uniformity, running performance, and grip performance under extremely high speed conditions are improved.

According to one aspect of the present invention, a pneumatic slick radial tyre having substantially no groove on the tread surface comprises a pair of bead cores disposed one in each bead portion of the tyre, a radial carcass extending between the bead portions and turned up around the bead cores, a rubber tread disposed radially outside the carcass to define the above-mentioned tread surface, and a belt structure between the carcass and the tread including a breaker disposed radially outside the carcass characterised by a band composed of 1 to 13 cords spirally and continuously wound and radially outside the breaker so as to cover at least a part of the said breaker.

A slick tread is employed to maximise the ground contacting area, and the band, which is the radially outermost reinforcing cord layer for the slick tread, is formed by winding at least one cord, so no overlap joint is made and thus the thickness variation of the known joint, which decreases uniformity of the tyre, is removed.

Accordingly, the tyre performance especially in high speed running is remarkably improved, and a stable tight hoop reinforcement effect on the breaker is obtained to remarkably improve the high speed durability of the tyre.

Preferably the tread rubber has an elastic property such that the ratio (tan $\delta/E'$) of the loss tangent (tan $\delta$) to the elastic modulus ($E'$ kgf/cm$^2$) is not less than 1.0 x 10$^{-2}$, that the hysteresis loss of the rubber and road contact of the tread face are improved and thereby the road grip performance is improved.

Here, the above-mentioned loss tangent/elastic modulus ratio is a new criterion for good road grip performance proposed by the present inventors. They found that road grip increases when the tread face contacts with the road surface with less rebound and so the loss tangent tan $\delta$ and the elastic modulus $E'$ have a close relation to the vibration damping factor and rebound and so when specifically defined as above the improved performance results.

According to the definition, the higher the elastic modulus $E'$, the larger the loss tangent.

Further, the tread rubber preferably has a JIS(A) hardness of not more than 45 at 100 degrees C, which temperature is roughly the same as the tread temperature during high speed running. This assists in providing the tread surface with the ability to fit the roughness of the road surface under high speed conditions without sacrificing wear resistance.

Furthermore, the tread rubber is preferred to have an acetone extract therefrom not less than 30%, and in addition a sulfur content not more than 1.8 parts by weight, whereby grip performance is again improved without sacrificing wear resistance.

An embodiment of the present invention will now be described, by way of example only, with reference to the drawings, in which:

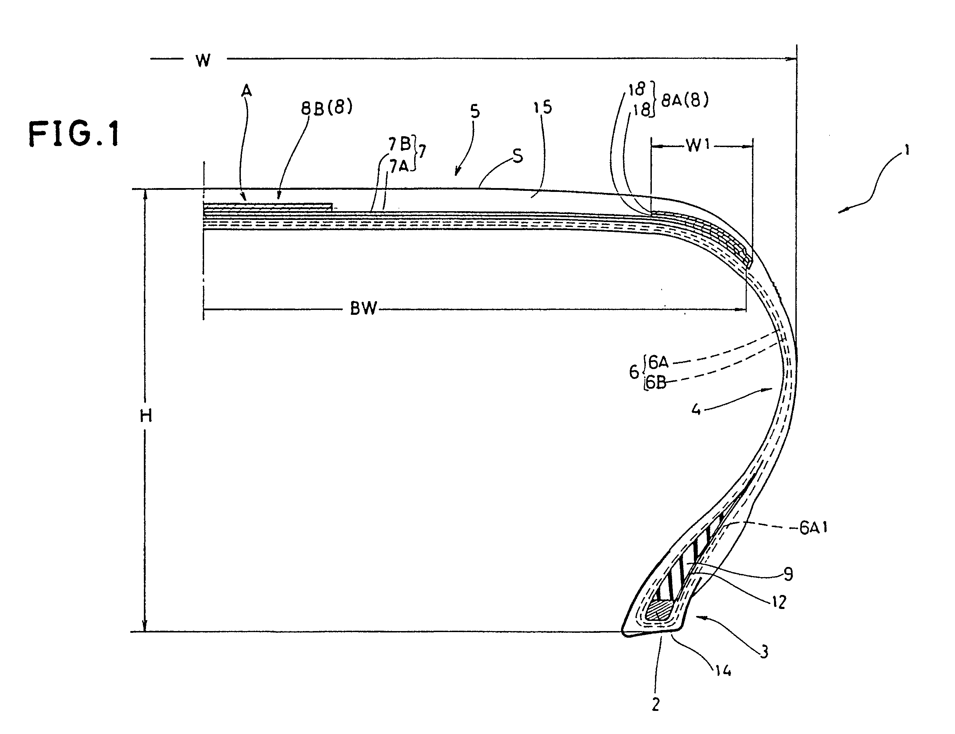

Figure 1 is a sectional view showing an embodiment of the present invention; and

Figure 2 is a diagram showing the resultant road grip performance tests.

A pneumatic radial tyre 1 has a pair of bead portions 3, a tread portion 5, and a pair of sidewalls 4 extending therebetween. A bead core 2 is disposed in each bead portion 3 and a carcass 6 is turned up around the bead cores 2 to form two turned up portions and a main portion extending between the bead portions 3. A rubber tread 15 having a slick surface S substantially devoid of any groove is positioned over a breaker 7 and is disposed radially outside the carcass 6. A band 8 disposed on the radially outside of the breaker forms a belt structure A in co-operation with the above-mentioned breaker 7.

The aspect ratio of the tyre 1, that is the ratio H/W of the tyre section height H to the maximum tyre section width W when inflated to the maximum pressure, is not more than 0.60.

The carcass 6 is composed of two plies of polyester fibre cords laid at 75 to 90 degrees to the tyre equator.

In order to prevent the carcass plies from coming loose, the inner carcass ply 6A is turned up around the bead cores 2 from the axially inside to outside thereof, and the outer carcass ply 6B is reversely turned up around the bead cores 2 from the axially outside to the inside thereof so as to cover the edge 6A1 of the turned up portion of the inner ply 6A. Accordingly, the carcass 6 is firmly secured to the bead cores 2, and further the rigidity of the bead portion 3 and the sidewall inner region is increased.

In this example, a polyester fibre cord is used for the carcass cord, but another organic fibre cord, such as rayon, nylon, aromatic polyamide or the like may be used. Further, all of the carcass plies may be turned up in the same direction from the inside to the outside or vice versa.

In each bead portion 3, a bead apex 9 made of a hard rubber is disposed between the main portion and the turned up portion of the carcass 6, and a bead reinforcing cord layer 12 is disposed axially outside the bead apex 9. A rim chafer 14 is disposed along the outer surface of the bead portion 3.

The above-mentioned breaker 7 is composed of two plies 7A and 7B of high modulus steel cords laid at 10 to 30 degrees to the tyre equator so that the cords in each ply are arranged parallel to each other but crosswise to the cords of the next ply.

In order to reinforce the full tread width and to provide a hoop effect throughout the tread portion, each edge of the breaker 7 is positioned at a point near to and slightly outside of the tread edge.

In order to reduce stress concentration on the breaker edges, the edges of the breaker plies 7A,7B are relatively displaced in the axial direction so as not to align with each other, and the inner most ply 7A is wider than the outer ply 7B.

The band 8 is composed of a pair of shoulder band layers 8A disposed one in each tread shoulder region so as to cover the breaker edges, and a centre band layer 8B disposed in the tread crown region so as to cover the central part of the breaker 7.

The width W1 of each shoulder band is preferably set to be not less than 10% of the breaker width BW.

The shoulder band layer 8A is composed of two plies 18 of organic fibre cords having an elastic modulus lower than that of the breaker cords. Similarly the centre band layer 8B is composed of two plies of organic fibre cords having an elastic modulus lower than that of the breaker cords.

The band cord is a rubberised cord made of two twisted 500-1500 denier strands, and the elongation of the cord measured according to the L1017 procedure specified in JIS (Japanese Industrial Standard) is 8-10%.

The elastic modulus of the band cord is preferably set in the range of 1000-3000 kgf/mm$^2$.

Especially, nylon cord having a heat shrinking property is preferably used since such a property further improves the hoop force of the band when heated by not only the tyre vulcanisation process but also by heat generated in the tread portion during high speed running, thereby improving the high speed durability of the tread portion.

Aside from the organic fibre cords described, inorganic fibre cords may be used.

In each ply of the band layers 8, one or more cords are wound together spirally and continuously in the circumferential direction of the tyre to form the ply, whereby an endless band structure is formed.

The number of band cords wound at the same time is not more than thirteen, and even more preferably not more than eight.

Thus, the band layers 8 prevent tread portion expansion due to centrifugal force of high speed rotation of the tyre. Particularly the shoulder band layers 8A effectively improve high speed durability of the tyre.

Further, it is possible to form the inner belt ply 7A and the outer belt ply 7B with continuous belt cord(s) between the plies, for example, by starting to wind the band cord(s) from one edge and moving to the other edge to form the inner ply and then turning back to the starting point while winding the cord(s) around the inner ply to form the outer ply.

The above-mentioned centre band layer 8B can be omitted from the band 8 if required. Alternatively the band 8 can be formed as a full width band to cover the whole width of the breaker by winding the cord(s)

3

continuously from one edge to the other edge of the breaker.

The tread rubber 5 is required to have a good wear resistance, a low heat generation property, and good road grip performance.

For road grip performance it is necessary to increase the friction between the tread surface and the road surface, by allowing fast shaping of the tread surface to conform to the roughness of the road surface, and to lessen the rebound of the tread from the road surface.

Therefore, in the present invention the JIS (A) hardness of the tread rubber 15 at 100 degrees C, which is the same level as the temperature during extreme high speed running, is set in the range of 35 to 45, and more preferably 35 to 40. When the hardness is more than 45, the conformability of the tread surface to the road surface is remarkably decreased. When the hardness is less than 35, cornering power is decreased to lower the running performance.

The radio ($\tan \delta/E'$) of the loss tangent $\tan \delta$ to the elastic modulus $E'$ (kgf/cm$^2$) is set to be not less than $1.0 \times 10^{-2}$, and more preferably in the range of $1.4 \times 10^{-2}$ to $1.8 \times 10^{-2}$, whereby the hysteresis loss of the tread rubber is increased and the conformability of the tread surface is improved, and thereby the road grip performance is improved.

When the ratio is more than $1.8 \times 10^{-2}$, heat generation by the repeated bending deformation increases.

Here, the loss tangent and the elastic modulus were measured under the following conditions by using a High Power Spectrometer made by IWAMOTO SEISAKUSYO.

| Test piece size | 25 x 5 x 5 mm |
|---|---|
| Temperature | 70 degrees C |
| Initial strain | 5% |
| Frequency | 10Hz |
| Amplitude | 2% |

Furthermore, in order to improve the road gripping performance without sacrificing wear resistance of the read, the tread rubber 15 is compounded such that the acetone extract is not less than 30% and the content of sulfur is not more than 1.8 parts by weight, per 100 parts of polymer.

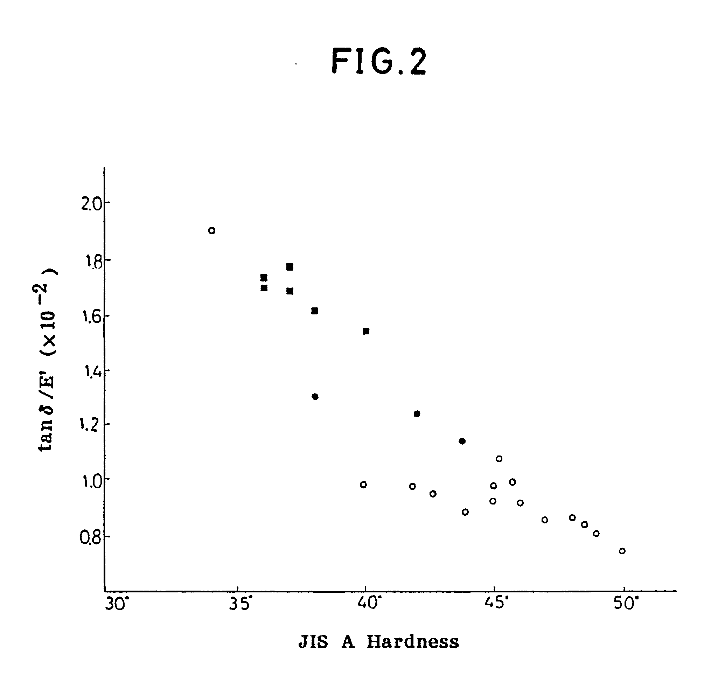

Figure 2 shows the results of actual races, wherein the marks ● and ■ indicate that road grip performance was excellent and the mark ■ indicates that total performance including the road grip performance was particularly excellent.

## Claims

1. A pneumatic radial tyre comprising a pair of bead cores (2) disposed one in each bead portion (3) of the tyre, a carcass (6) extending between the bead portions (3) and turned up around the bead cores (2), a rubber tread (15) disposed radially outside the carcass (6) having a slick tread surface, and a belt structure (7) between the carcass (6) and the tread (15) characterised by a band (8) composed of one to thirteen cords spirally and continuously wound around the radially outside of the breaker (7).

2. A tyre according to Claim 1 characterised in that the tread rubber (15) has the elastic property that the ratio ($\tan \delta/E'$) of the loss tangent ($\tan \delta$) to the elastic modulus $E'$ kgf/cm$^2$) is not less than $1.0 \times 10^{-2}$.

3. A tyre according to Claim 1 characterised in that the tread rubber (15) has the elastic property that the ratio ($\tan \delta/E'$) of the loss tangent ($\tan \delta$) to the elastic modulus $E'$ kgf/cm$^2$) is between $1.4 \times 10^{-2}$ and $1.8 \times 10^{-2}$.

4. A tyre according to Claim 1, 2 or 3 characterised in that the tread rubber (15) has a JIS(A) hardness of not more than 45 at 100 degrees C.

5. A tyre according to any of Claims 1 to 4 characterised in that the acetone extract from the tread rubber is not less than 30%, and the sulfur content of the tread rubber is not more than 1.8 parts by weight per 100 parts of polymer.

6. A tyre according to any of Claims 1 to 5 characterised in that the band (8) comprises a full width band.

7. A tyre according to any of Claims 1 to 5 characterised in that the band (8) comprises a narrow centre band 8B and two narrow edge bands 8A.

8. A tyre according to Claim 7 characterised in that the edge bands 8A have a width (W1) which is more than 10% of the breaker width (BW).

9. A tyre according to any of Claims 1 to 8 characterised in that the band cords have an elastic modulus in the range of 1000 to 3000 kgf/mm$^2$.

FIG.1

# FIG.2